# EUROPÄISCHE PATENTSCHRIFT

(11) **EP 0 729 787 B1**
(45) Veröffentlichungstag und Bekanntmachung des Hinweises auf die Patenterteilung: **18.07.2001**
(21) Anmeldenummer: 96102310.8
(22) Anmeldetag: 16.02.1996
(51) Int. Cl.: B01L 9/02, A47B 47/00

(54) **Labormöbel**
Furniture for laboratory
Meuble de laboratoire

(30) Priorität: 01.03.1995 DE 29503394 U
(43) Veröffentlichungstag der Anmeldung: 04.09.1996
(73) Patentinhaber: FESTO AG & Co, 73734 Esslingen (DE)
(72) Erfinder: Stoll, Kurt, Dr., D-73732 Esslingen (DE); Schlotterbeck, Rolf, D-73207 Plochingen (DE)
(74) Vertreter: Abel, Martin, Dipl.-Ing.

(56) Entgegenhaltungen:
- DE-A- 2 132 139
- DE-A- 2 344 703
- US-A- 4 650 425
- US-A- 4 694 965
- US-A- 4 826 438

## Beschreibung

Die Erfindung betrifft ein Labormöbel, insbesondere für Schulungs- und/oder Demonstrationszwecke, mit einer Halteeinrichtung, die eine aufgerichtet angeordnete, als Strangpreßteil ausgeführte Nutenplatte umfaßt, die an wenigstens einer ihrer beiden Plattenflächen eine Mehrzahl von parallel zueinander angeordneten, in Längsrichtung verlaufenden horizontalen Befestigungsnuten aufweist, die zur lösbaren Halterung von Funktionselementen wie z.B. Ventile, Arbeitszylinder, elektronische Steuergeräte od.dgl. dienen.

Labormöbel dieser Art werden überwiegend in den Bereichen Forschung, Entwicklung und Ausbildung eingesetzt, beispielsweise an Schulen, in Werkstätten oder in Labors. Je nach Ausgestaltung können sie nach Art von Tischen, Werkbänken, fahrbaren Wagen oder ähnlichem gestaltet sein. In dem Prospekt "Learnline. Eingerichtet für die berufliche Qualifikation" der Festo Didactic KG sind solche Labormöbel auf Seiten 6, 7, 16 bis 21 beschrieben.

Die aufgerichtet angeordnete Nutenplatte dieser Labormöbel wird dazu verwendet, um Funktionselemente wie Ventile, Arbeitszylinder, elektronische Steuergeräte etc. lösbar zu fixieren und pneumatische, hydraulische, elektrische oder elektronische Schaltungen aufzubauen. Anhand solcher praktisch aufgebauter Schaltungen lassen sich dann bestimmte Vorgänge simulieren, Versuche durchführen oder bestimmte, mit den Funktionselementen verbundene Kenntnisse vermitteln.

Die bekannten Labormöbel haben vor allem den Nachteil, daß ihre Herstellungskosten relativ hoch sind. Vor allem die Nutenplatte ist speziell bei großer Baubreite relativ teuer, weil die Kosten für das zu ihrer Herstellung erforderliche Strangpreßwerkzeug nicht unbeträchtlich sind. Darüber hinaus ist auch die Montage der Nutenplatte an dem Labormöbel relativ aufwendig, sie wird in der Regel an irgend welchen Querträgern aufgehängt.

Es ist daher die Aufgabe der vorliegenden Erfindung, ein Labormöbel der eingangs genannten Art zu schaffen, das sich kostengünstiger herstellen und montieren läßt.

Zur Lösung dieser Aufgabe ist vorgesehen, daß die Halteeinrichtung am unteren Längsrand der Nutenplatte über wenigstens eine über einen Winkelbereich einstückig mit der Nutenplatte verbundene und ebenfalls als Strangpreßteil ausgeführte Querplatte verfügt und daß wenigstens einer der sich an den Winkelbereich anschließenden Plattenabschnitte der Halteeinrichtung aus mehreren durch eine Kaltpreßschweißverbindung fest zusammengefügten Plattenelementen besteht.

Auf diese Weise liegt eine Halteeinrichtung vor, die sich, im Querschnitt gesehen, aus mehreren fest miteinander verbundenen Schenkeln zusammensetzt, welche zum einen von der Nutenplatte und zum andern von wenigstens einer Querplatte gebildet sind. Es liegt somit ein selbsttragendes, in sich steifes Winkelgebilde vor, das sich bei Bedarf allein über die wenigstens eine Querplatte an einer geeigneten Unterlage, beispielsweise an einer Tischplatte oder einem Traggestell, befestigen läßt, ohne daß für die aufrechte und vorzugsweise vertikal angeordnete Nutenplatte zusätzliche Befestigungs- oder Abstützmaßnahmen erforderlich sind. Dies erleichtert die Montage beträchtlich. Äußerst kostengünstig auf den Fertigungsvorgang wirkt sich die Kaltpreßschweißverbindung aus, die unter Verwendung kleiner Strangpreßwerkzeuge große Breitenabmessungen der einzelnen Plattenabschnitte ermöglicht. So kann beispielsweise der von der Nutenplatte gebildete Plattenabschnitt und/oder wenigstens ein von einer Querplatte gebildeter Plattenabschnitt aus mehreren schmäleren Plattenelementen zusammengesetzt sein, wobei im Fügebereich Kaltpreßschweißstellen vorliegen, die unter anderem auch den Vorteil haben, daß eine einen Verzug hervorrufende Temperaturentwicklung vermieden wird. Die vorhandenen Kaltpreßschweißverbindungen sind zweckmäßigerweise in der Art ausgeführt, wie sie in den deutschen Patentschriften DE 21 32 139, DE 23 31 155, DE 23 44 638 oder DE 23 44 703 beschrieben sind.

In der US 4 650 425 werden bereits verschiedene Bauformen von Halteeinrichtungen für Funktionselemente beschrieben, die über Nutenplatten verfügen. Soweit jedoch im Querschnitt mehrschenklige Nutenplatten zum Einsatz kommen, handelt es sich um einstückig extrudierte Bauteile, deren Herstellung entsprechend teuer ist. Zwar kommen in einem Falle von einer Querplatte vertikal hochragende Nutenplatten zum Einsatz. Bei ihnen handelt es sich jedoch weiterhin um lösbar an der Querplatte angeordnete separate Bauteile, die aufwendig justiert und montiert werden müssen und die jeweils nur aus einem einzigen Plattenelement bestehen.

Vorteilhafte Weiterbildungen der Erfindung gehen aus den Unteransprüchen hervor.

Bevorzugt ist die Nutenplatte in einer Vertikalebene stehend ausgerichtet und verfügt an beiden Plattenflächen über Befestigungsnuten für Funktionselemente, so daß zwei gut zugängliche Bestückungsflächen vorhanden sind und an dem Labormöbel zwei voneinander unabhängige Arbeitsplätze zur Verfügung gestellt werden können.

Der die einzelnen Plattenabschnitte miteinander verbindende Winkelbereich ist zweckmäßigerweise von einem einstückigen Winkelelement gebildet, das eine der Anzahl der gewünschten Nuten- und Querplatten entsprechende Anzahl von Schenkeln aufweist, wobei an wenigstens einen dieser Schenkel ein Plattenelement durch Kaltpreßschweißung angefügt ist.

Das Winkelelement kann ein L-Element sein, so daß sich im Querschnitt L-förmig strukturierte Halteeinrichtungen herstellen lassen. Im Querschnitt T-förmige Halteeinrichtungen können unter Verwendung eines im Querschnitt T-förmigen Winkelelementes aufgebaut werden.

Die wenigstens eine Querplatte kann querschnittsmäßig so gestaltet werden, daß sie eine Flüssigkeitsauffangwanne bildet, die von an der Nutenplatte festgelegten Funktionselementen herabtropfende Flüssigkeit, beispielsweise öl, auffängt.

An wenigstens einem der an das Winkelelement angeschweißten Plattenelemente kann vorzugsweise eine sich über die gesamte Plattenlänge erstreckende Sonderfunktionseinheit einstückig angeformt sein, die beim Strangpressen unmittelbar angeformt wird. Man kann auf diese Weise die die Sonderfunktionseinheiten bildenden Plattenelemente mittels kleinen und daher verhältnismäß kostengünstigen Strangpreßwerkzeugen herstellen und anschließend an ein anderes Plattenelement anschweißen. Plattenabschnitte mit großer Breite und mit wenigstens einer Sonderfunktionseinheit können auf diese Weise unter Verwendung einer beliebigen Anzahl randseitig zusammengefügter ebener Plattenelemente und einem Sonderplattenelement kostengünstig zusammengebaut werden. Bei den Sonderfunktionseinheiten dieser Sonderplattenelemente kann es sich beispielsweise um Leitungskanalgehäuse für elektrische Leitungen oder Fluidleitungen handeln, um Bedienungspultgehäuse, um Fluidspeichergehäuse oder um Aufnahmerahmen für z.B. mit elektrischen und/oder elektronischen Bauelementen bestückte Einschubelemente.

Nachfolgend wird die Erfindung anhand der beiliegenden Zeichnung näher erläutert. In dieser zeigen:
- Fig. 1: eine beispielhafte Bauform des erfindungsgemäßen Labormöbels in Gestalt eines Laborwagens in Seitenansicht mit Blickrichtung gemäß Pfeil I aus Fig. 2,
- Fig. 2: eine kombinierte Stirn- und Querschnittsansicht des Laborwagens aus Fig. 1 gemäß Schnittlinie II-II,
- Fig. 3: die bei dem Laborwagen gemäß Fig. 2 verwendete Halteeinrichtung in vergrößerter Darstellung, wobei die Kaltpreßschweißstellen durch strichpunktierte Kreise markiert sind,
- Fig. 4: eine alternative Bauform der Halteeinrichtung in einer der Fig. 3 entsprechenden Darstellungsweise,
- Fig. 5, 6 und 7: verschiedene Ausführungsformen von Sonderplattenelementen, die Bestandteil der Halteeinrichtung sein können und die beispielsweise an der strichpunktiert eingekreisten Schweißstelle V der Halteeinrichtung gemäß Fig. 4 anstelle des angeschweißten ebenen Plattenelementes angefügt sein können,
- Fig. 8: eine weitere Bauform der Halteeinrichtung in einer der Fig. 3 entsprechenden Darstellungsweise,
- Fig. 9: wiederum eine andere Bauform der Halteeinrichtung in einer der Fig. 3 entsprechenden Darstellungsweise und
- Fig. 10: den in Fig. 4 markierten Verschweißungsbereich V in vergrößerter Darstellung, wobei die zusammengefügten Plattenelemente in getrenntem Zustand vor der Herstellung der Schweißverbindung gezeigt sind.

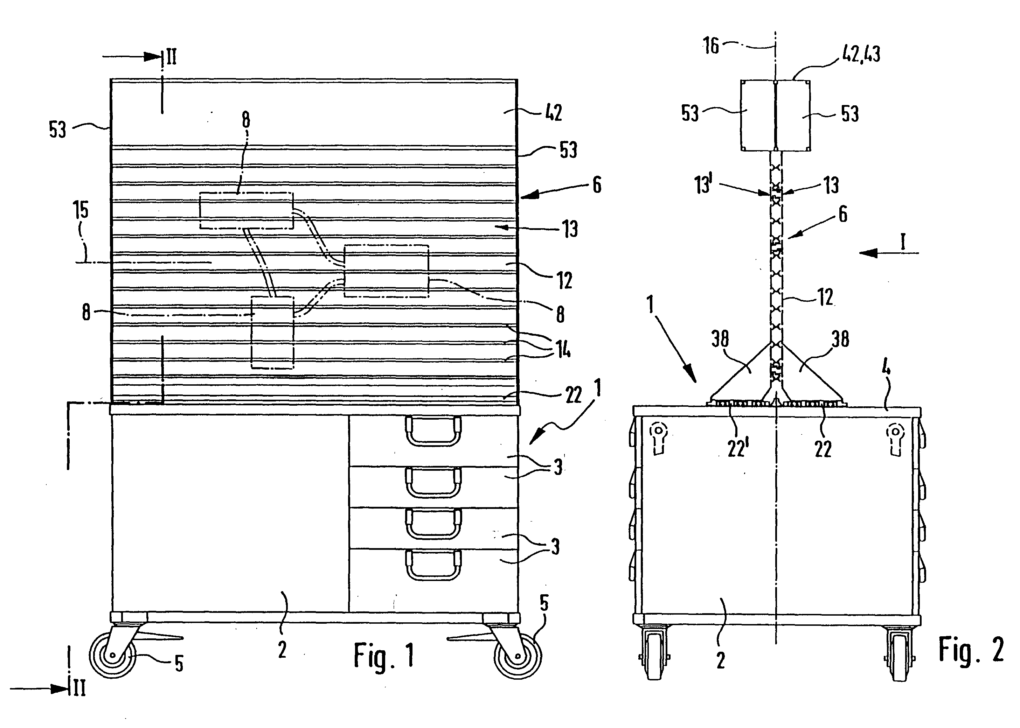

Das in Fig. 1 und 2 abgebildete Labormöbel 1 ist als Laborwagen ausgeführt. Es verfügt über eine z.B. kastenartige Unterkonstruktion 2 mit seitlichen Schubladen 3 und einer oberen, horizontal ausgerichteten Arbeitsplatte 4. An der Unterseite sind Räder bzw. Rollen 5 angeordnet, die es ermöglichen, das Labormöbel 1 auf einer Unterlage zu verschieben.

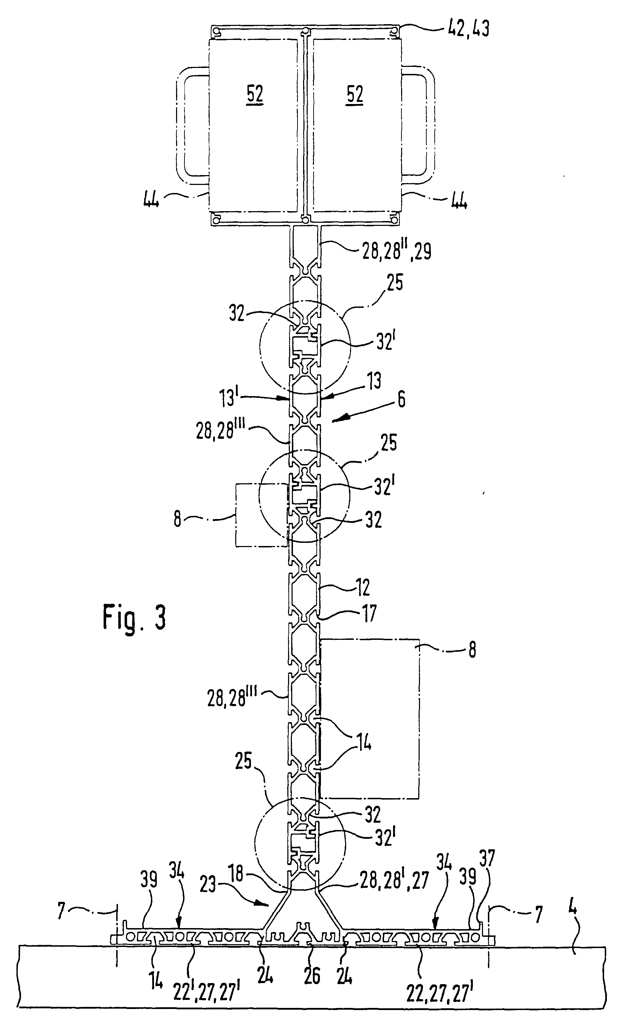

Auf der Arbeitsplatte 4 ist nach Art eines Aufsatzes eine Halteeinrichtung 6 montiert, die in Fig. 3 in vergrößerter Darstellung gezeigt ist. Die Halteeinrichtung 6 kann auf die Oberseite der Arbeitsplatte 4 aufgeschraubt sein, entsprechende Schraubverbindungen sind in Fig. 3 bei 7 angedeutet.

In einer abgewandelten Bauform kann die Unterkonstruktion 2 beispielsweise auch ein Tisch oder eine Werkbank sein oder aber ein einfaches, aus Stützen und/oder Streben zusammengesetztes Gestell.

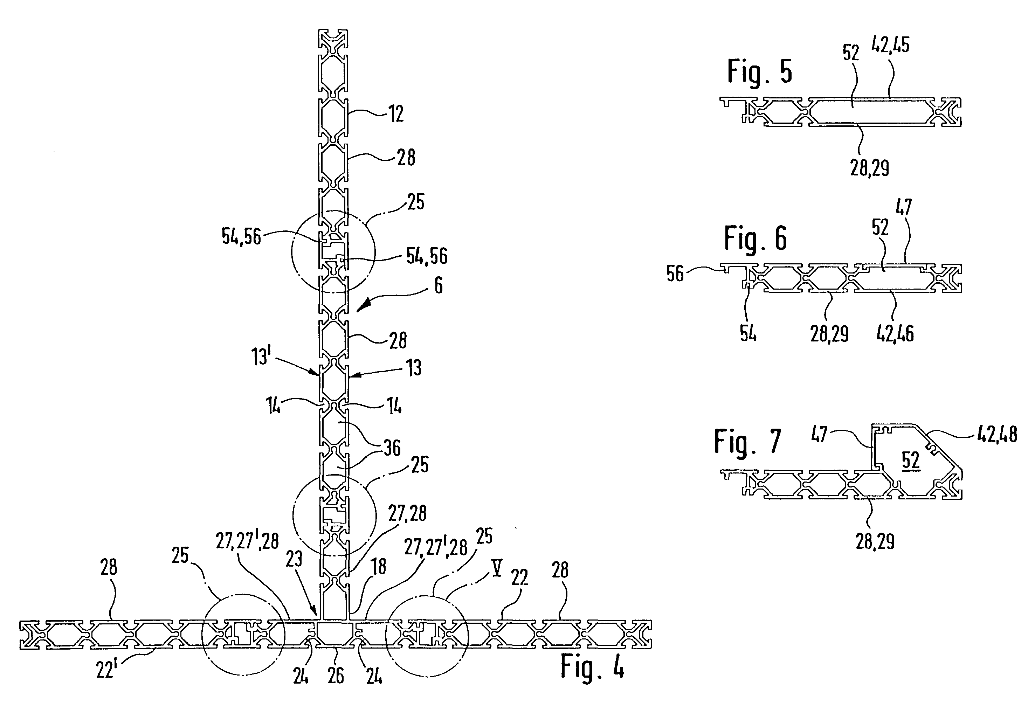

Ausführungsvarianten der Halteeinrichtung 6 sind in Fig. 4 bis 9 einzeln ohne Abbildung einer Unterkonstruktion dargestellt.

Das Labormöbel 1 wird vorwiegend in Unterrichtsstätten, Werkstätten, Labors od.dgl. eingesetzt. Es ist möglich, an seiner Halteeinrichtung 6 Funktionselemente 8 in beliebiger Verteilung lösbar festzulegen, um insbesondere pneumatische, hydraulische und/oder elektrische Schaltungsanordnungen aufzubauen. Diese können dann zu Versuchs-, übungs-, Demonstrations- oder Schulungszwecken verwendet werden, beispielsweise im Bereich der Aus- und Weiterbildung. Dementsprechend können die nur strichpunktiert angedeuteten Funktionselemente 8 praktisch beliebiger Art sein, es kann sich beispielsweise um pneumatische, hydraulische, elektrische, optische oder elektronische Einrichtungen handeln; als nicht abschließende Aufzählung sei an dieser Stelle auf Ventile, Arbeitszylinder, Manometer, elektronische Steuergeräte od.dgl. verwiesen.

Zur lösbaren Befestigung dieser Funktionselemente 8 verfügt die Halteeinrichtung 6 über eine aufgerichtet stehende, bei allen Ausführungsbeispielen in einer Vertikalebene verlaufende Nutenplatte 12. In deren beiden einander entgegengesetzten vertikal verlaufenden Plattenflächen 13, 13' ist jeweils eine Vielzahl von Befestigungsnuten 14 eingebracht, die in zueinander paralleler Ausrichtung und in zweckmäßigerweise gleichmäßiger Verteilung über die zugeordnete Plattenfläche 13, 13' verteilt angeordnet sind. Die Nutenplatte 12 ist ein extrudiertes Teil, d. h. ein Strangpreßteil, bei dessen Herstellung die Befestigungsnuten 14 unmittelbar eingeformt werden. Die Strangpreßrichtung gibt die Längsrichtung 15 der Nutenplatte 12 vor, die horizontal verläuft, so daß sich auch die Befestigungsnuten 14 in Horizontalrichtung erstrecken. Die Breitenrichtung 16 der Nutenplatte 12 fällt mit der Vertikalrichtung zusammen, so daß die Befestigungsnuten 14 horizontal übereinander angeordnet sind.

Die Befestigungsnuten 14 haben eine lineare Erstreckung und sind an den Stirnseiten der Nutenplatte 12 offen, ebenso an ihrer der zugeordneten Plattenfläche 13, 13' zugewandten Längsseite. über diese schlitzartige Nutöffnung 17 können die Funktionselemente 8 lösbar in den Befestigungsnuten 14 verankert und gleichzeitig auf die betreffende Plattenfläche 13, 13' aufgespannt werden. Entsprechende Befestigungseinrichtungen gehen aus der WO 94/19786 oder der WO 94/19787 hervor, so daß sich an dieser Stelle weitere Einzelheiten erübrigen.

Es ist möglich, an der vertikal ausgerichteten Nutenplatte 12 beidseits Funktionselemente 8 anzuordnen, so daß an ein und demselben Labormöbel 1 gleichzeitig zwei Arbeitsplätze zur Verfügung stehen.

Während die Befestigungsnuten 14 beim Ausführungsbeispiel untereinander gleich ausgebildet sind, verfügt eine nicht dargestellte Bauform über Befestigungsnuten 14 unterschiedlicher Größe und/oder Gestaltung, wobei auf ein und derselben Plattenfläche unterschiedliche Befestigungsnuten vorgesehen sein können. Auf diese Weise kann die Kompatibilität mit unterschiedlichen, zur Befestigung der Funktionselemente 8 verwendeten Befestigungssystemen hergestellt werden. Es ergeben sich damit universelle Einsatzmöglichkeiten.

Die Nutenplatte 12, wie im übrigen die gesamte Halteeinrichtung 6, besteht vorzugsweise aus Leichtmetall, insbesondere aus Aluminiummaterial.

Im Bereich des untenliegenden Längsrandes 18 der Nutenplatte 12 ist wenigstens eine Querplatte 22, 22' festgelegt. Auch sie ist ein Strangpreßteil wie die Nutenplatte 12 und hat zweckmäßigerweise die gleiche Länge wie diese. Ihre Plattenebene verläuft quer und vorzugsweise rechtwinkelig zur Plattenebene der Nutenplatte 12.

Eine jeweilige Querplatte 22, 22' ist über einen Winkelbereich 23 einstückig starr mit der Nutenplatte 22 verbunden. Auf diese Weise ist die Halteeinrichtung 6 eine in sich starre, selbsttragende Konstruktion.

Im Falle der Bauformen gemäß Fig. 1 bis 4 und 8 sind zwei in einer gemeinsamen Horizontalebene liegende Querplatten 22, 22' vorgesehen, die jeweils mit einem ihrer Längsränder 24 dem unteren Längsrand 18 der Nutenplatte 12 zugewandt sind. Das auf diese Weise vorliegende Plattengebilde hat im Querschnitt gesehen die Form eines Doppel-L bzw. eines auf dem Kopf stehenden T.

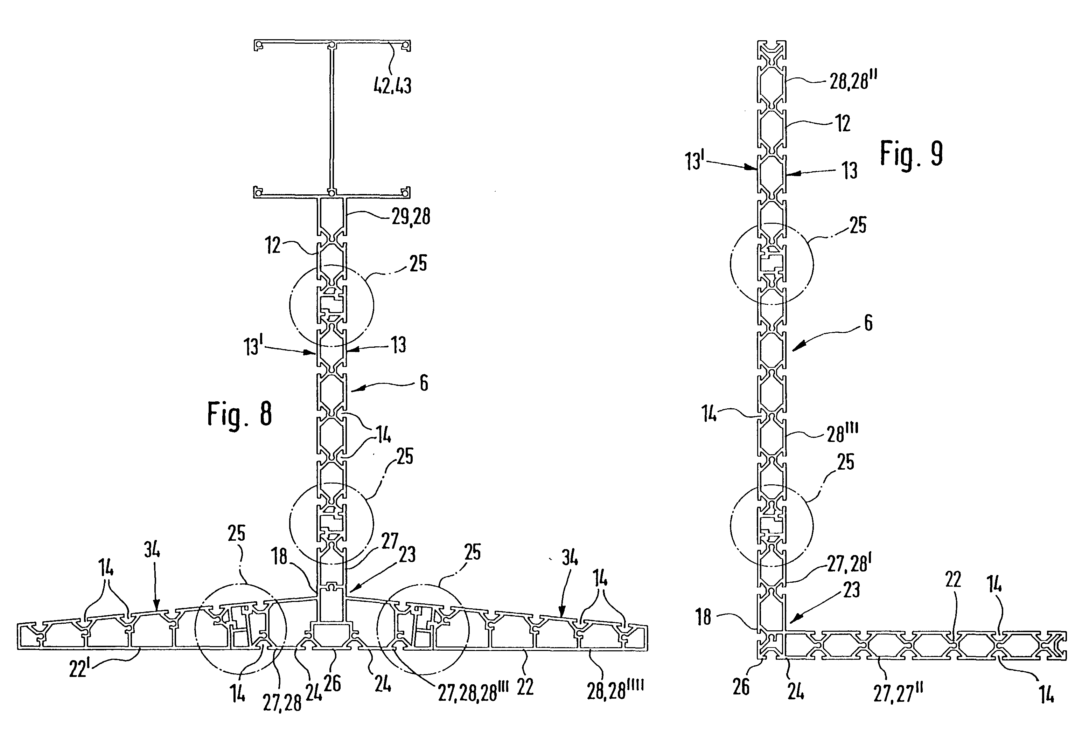

Beim Ausführungsbeispiel der Fig. 9 ist nur eine Querplatte 22 vorhanden, so daß sich ein im Querschnitt L-förmiges Plattengebilde ergibt.

Wenigstens einer der sich an den Winkelbereich 23 anschließenden, von der Nutenplatte 12 und den Querplatten 22, 22' gebildeten Plattenabschnitte der Halteeinrichtung 6 besteht aus mehreren durch eine Kaltpreßschweißverbindung fest zusammengefügten Plattenelementen. Derartige, durch eine Kaltpreßschweißung hergestellte Verbindungsbereiche 25 sind in den Figuren durch strichpunktierte Kreise markiert. Die betreffende Maßnahme ermöglicht es, praktisch beliebig breite Plattenabschnitte zur Verfügung zu stellen, ohne auf große und teure Strangpreßwerkzeuge zurückgreifen zu müssen. Es ist möglich, Plattenelemente mit standardisierter Breite zur Verfügung zu stellen und je nach Bedarf durch seitliche Aneinanderreihung einer entsprechenden Anzahl dieser Plattenelemente Plattenabschnitte unterschiedlicher Breite zu verwirklichen. Solche standardisierte Plattenabschnitte können mit einfacheren Strangpreßwerkzeugen kostengünstiger hergestellt werden. Gleichwohl verfügt der durch Kaltpreßschweißung zusammengefügte Plattenabschnitt über eine sehr hohe Festigkeit.

Zentrales Element bei allen abgebildeten Halteeinrichtungen 6 ist ein den erwähnten Winkelbereich 23 bildendes einstückiges Winkelelement 26. Es besitzt eine der Anzahl der sich anschließenden Nuten- und Querplatten 12, 22, 22' entsprechende Anzahl von winkelig zueinander angeordneten Schenkeln 27, die jeweils ganz oder teilweise die zugeordnete Nuten- bzw. Querplatte 12, 22, 22' bilden. Ein jeweiliger Schenkel 27 kann also von Fall zu Fall eine der Platten 12, 22, 22' in ihrer Gesamtheit bilden oder aber nur ein Plattenelement, das durch Anfügung mindestens eines weiteren Plattenelementes zu einer entsprechenden Platte 12, 22, 22' zusammengesetzt ist.

Beim Ausführungsbeispiel der Fig. 3 ist das Winkelelement 26 ein T-Element mit drei Schenkeln 27. Die den in einer gemeinsamen Ebene liegenden T-Schenkeln entsprechenden Schenkel 27, 27' verlaufen in einer Horizontalebene und bilden jeweils komplett eine der beiden Querplatten 22, 22'. Der den dritten T-Schenkel bildende hochragende Schenkel 27 hingegen ist nur eines von mehreren Plattenelementen 28, aus denen sich die Nutenplatte 12 zusammensetzt. Beispielsgemäß sind außer dem Schenkel 27 drei weitere Plattenelemente 28 vorgesehen, die mit jeweils einander zugewandten Längsrändern 32, 32' unter Bildung eines Verbindungsbereiches 25 kaltpreßverschweißt sind. Das von dem Schenkel 27 gebildete unterste Plattenelement 28' und das oberste Plattenelement 28'' verfügen also jeweils nur über einen Schweißbereich, während die beiden dazwischenliegenden Plattenelemente 28''' über jeweils zwei Schweißbereiche verfügen, die sich an ihren beiden einander entgegengesetzten Längsrändern befinden.

Bei der Halteeinrichtung 6 gemäß Fig. 4 ist das Winkelelement 26 ebenfalls ein T-Element. Hier bilden aber auch die beiden in einer gemeinsamen Horizontalebene liegenden T-Schenkel 27' jeweils nur ein Plattenelement 28, an das über einen Verbindungs- bzw. Verschweißungsbereich 25 ein weiteres Plattenelement 28 als Abschlußelement angefügt ist. Somit setzt sich jede Querplatte 22, 22' aus zwei Plattenelementen 28 zusammen. Im Vergleich zu der Fig. 3 ist die Nutenplatte 12 um ein Plattenelement 28 reduziert.

Während die einzelnen Plattenelemente bei der Ausführungsform gemäß Fig. 4 im Querschnitt gesehen jeweils im wesentlichen rechteckförmig konturiert sind, macht die Fig. 8 deutlich, daß auch abweichende Konturformen möglich sind. Hier ist die nach oben weisende Plattenfläche 34 der Querplatten 22, 22' gegenüber der Horizontalen geneigt und steigt in Richtung zur Nutenplatte 12 schräg an. Sofern die Plattenfläche 34 als Arbeitsfläche oder als Bestückungsfläche für Funktionselemente verwendet wird, erhöht dies den Bedienkomfort, da eventuelle Anzeigeeinrichtungen dem Betrachter besser zugewandt sind. Auch bei von einer Rechteckkonturierung abweichenden Formen können die entsprechenden Platten selbstverständlich aus miteinander verschweißten Plattenelementen 28 zusammengesetzt sein. Dies ist in Fig. 8 demonstriert, wo sich die beiden mit schräger Plattenoberfläche versehenen Querplatten 22, 22' aus jeweils einem von einem Schenkel 27 gebildeten inneren Plattenelement 28''' und einem daran als Abschlußelement angesetzten äußeren Plattenelement 28'''' zusammensetzen. Die Unterteilung der Nutenplatte 12 entspricht hier im wesentlichen derjenigen aus Fig. 4.

An dieser Stelle sei vermerkt, daß die Querplatten 22, 22' an wenigstens einer ihrer Plattenflächen ebenfalls mit in Längsrichtung verlaufenden Befestigungsnuten 14 ausgestattet sein können. Befinden sie sich an der oberen Plattenfläche 34, können sie zur Festlegung beliebiger Bauteile, insbesondere auch von Funktionselementen, verwendet werden. An der entgegengesetzten unteren Plattenfläche 35 angeordnete Befestigungsnuten 14 eignen sich beispielsweise zur Befestigung der Halteeinrichtung 6 an einer Unterlage, beispielsweise an der Arbeitsplatte 4. Bei einer solchen Befestigung könnte im Falle der Fig. 3 auf die Schraubverbindungen 7 verzichtet werden.

Bei der in Fig. 9 abgebildeten Halteeinrichtung 6 kommt ein als einstückiges L-Element ausgebildetes Winkelelement 26 zum Einsatz. Sein horizontal ausgerichteter L-Schenkel 27'' bildet unmittelbar und vollständig die einzige Querplatte 22. Hingegen bildet sein vertikal nach oben ragender anderer L-Schenkel wie im Falle der Bauform gemäß Fig. 4 das unterste Plattenelement 28' der Nutenplatte 12, auf das vertikal nach oben noch ein mittleres Plattenelement 28''' und ein oberstes Plattenelement 28, 28'' folgen.

Zumindest die Nutenplatte 12, vorzugsweise aber auch die Querplatten 22, 22', verfügen zweckmäßigerweise über einen Querschnitt mit Rippenstruktur, so daß sich im Platten-Innern in Längsrichtung durchgehende Kanäle 36 ergeben. Diese bewirken vor allem eine Material- und Gewichtseinsparung, lassen sich bei Bedarf aber auch als Verlegekanäle für Leitungen oder als Fluidführungskanäle verwenden.

Die Querplatten 22, 22' können, wie in Fig. 3 gezeigt ist, an der nach oben weisenden Plattenfläche 34 derart konturiert sein, daß sie eine Flüssigkeitsauffangwanne bilden. Deren Auffangbereich 39 wird innen von dem hochragenden Schenkel 27 des Winkelelementes 26 und außen von einer hochragenden Längsrippe 37 begrenzt. Um ein stirnseitiges Ausfließen der aufgefangenen Flüssigkeit zu verhindern, sind an die beiden Stirnflächen der Querplatten 22, 22' hochragende plattenförmige Wandelemente 38 angeschraubt, die in Fig. 2 abgebildet sind.

Im übrigen können sämtliche Strangpreßteile der Halteeinrichtung 6 an ihren beiden Stirnflächen mit Abdeckungen versehen sein.

In bevorzugter Ausgestaltung verfügen die Plattenabschnitte 12, 22, 22' zumindest teilweise über mindestens eine bei der Strangpreßherstellung unmittelbar einstückig angeformte Sonderfunktionseinheit 42. Sie zeichnet sich durch eine von der Gestaltung der übrigen Plattenbereiche abweichende, einem gewissen Funktionszweck angepaßte Formgebung aus.

Die in Fig. 2, 3 und 8 gezeigte Sonderfunktionseinheit 42 ist ein Aufnahmerahmen 43 für elektrische und/oder elektronische Einschubelemente 44.

Weitere Ausführungsbeispiele für Sonderfunktionseinheiten 42 zeigen die Fig. 5, 6 und 7. In Fig. 5 handelt es sich um ein Fluidspeichergehäuse 45, das als Speicher für ein Fluid wie Öl oder Druckluft verwendet werden kann, das beim Betrieb der Funktionselemente benötigt wird. In Fig. 6 handelt es sich um ein Leitungskanalgehäuse 46, in dem Fluidleitungen und/oder elektrische Leitungen verlegt werden können. Während im Falle der Fig. 5 die das Fluidspeichergehäuse 45 umfangsseitig begrenzende Wand insgesamt einstückiger Bestandteil des zugeordneten Plattenelementes 28 ist, kann das Leitungskanalgehäuse 46 gemäß Fig. 6 einen lösbaren Wandabschnitt 47 aufweisen, der sich zum Einlegen oder Entfernen von Leitungen vorübergehend abnehmen läßt.

Im Falle der Fig. 7 bildet die Sonderfunktionseinheit 42 ein Bedienpultgehäuse 48. Es begrenzt einen Hohlraum, in dem Leitungen verlegt werden können. Die Gehäusewand kann nach Bedarf durchbrochen werden, um Bedienelemente od.dgl. zu installieren.

Sämtliche abgebildeten Sonderfunktionseinheiten 42 begrenzen einen Aufnahmeraum 52, der je nach Funktion zur Aufnahme von Einschubelementen 44, Öl, Luft oder Leitungen od.dgl. verwendbar ist. Die umfangsseitigen Gehäusewände lassen sich in praktisch beliebiger Formgebung bei der Strangpreßherstellung vorgeben. Soweit ein stirnseitiger Abschluß erforderlich ist, können an die Stirnflächen der Platten 12, 22, 22' insbesondere plattenförmige Abdeckungen 53 angeschraubt werden, erforderlichenfalls unter Zwischenlegung von Dichtungen. Die oben erwähnten Abschlußwände 38 können Bestandteil solcher Abdeckungen sein.

Die Sonderfunktionseinheiten 42 sind zweckmäßigerweise an mit Bezug zu dem Winkelelement 26 separaten Plattenelementen 28 vorgesehen, die zur besseren Unterscheidung als Sonderplattenelemente 29 bezeichnet seien. Über durch Kaltpreßschweißung hergestellte Verbindungsbereiche 25 der oben erläuterten Art können diese Sonderplattenelemente 29 zum Bestandteil einer Nutenplatte 12 oder einer Querplatte 22, 22' gemacht werden. Dabei können sie als Zwischenplattenelemente ausgestaltet sein, die längsseits zwischen zwei weiteren Plattenelementen liegen, oder als Abschlußelemente, die zuäußerst eines jeweiligen Plattenabschnittes zu liegen kommen.

Im Falle der Fig. 1 bis 3 und 8 ist das oberste Plattenelement 28 der Nutenplatte 12 ein den Aufnahmerahmen 43 bildendes Sonderplattenelement 29. Es ist als Abschlußelement aufgesetzt.

Die in Fig. 5 bis 7 gezeigten Sonderfunktionseinheiten 42 sind ebenfalls Bestandteil von Sonderplattenelementen 29, die als Abschlußelemente einer Querplatte 22, 22' einsetzbar sind. Sie könnten beispielsweise bei der Ausführungsform der Fig. 4 anstelle des äußeren einfachen Plattenelementes 28 der rechten Querplatte 22 an den benachbarten T-Schenkeln 27' des Winkelelementes 26 angeschweißt werden.

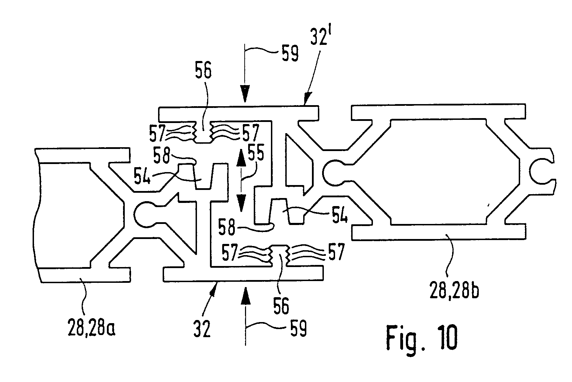

Die Schweißverbindung zwischen allen Plattenelementen 28, 29 ist eine Kaltpreßschweißverbindung, die als solche bereits Stand der Technik ist. Zur Herstellung einer solchen Schweißverbindung angewandte Verfahren gehen beispielsweise aus den deutschen Patentschriften DE 21 32 139, DE 23 31 155, DE 23 44 638 und DE 23 44 703 hervor, auf deren Inhalt verwiesen wird, so daß sich an dieser Stelle die Erläuterung besonderer Details erübrigt. In Fig. 10 ist das Prinzip des derzeit als besonders zweckmäßig erachteten Kaltpreßschweißverfahrens dargestellt, wie es etwa Gegenstand der DE 23 44 638 und DE 23 44 703 ist.

Man erkennt längsseitige Randabschnitte zweier miteinander zu verschweißender Plattenelemente 28a, 28b, die mit den entsprechenden Längsrändern 32, 32' einander zugewandt sind. An dem einen Plattenelement 28a ist eine sich in Längsrichtung erstreckende Verbindungsnut 54 ausgebildet, der, bezogen auf die Dickenrichtung 55 der Platten, ein am anderen Plattenelement 28b einstückig angeformter, sich ebenfalls in Längsrichtung erstreckender rippenartiger Verbindungswulst 56 gegenüberliegt. In der Plattenebene versetzt dazu ist, mit umgekehrter Zuordnung, ein weiteres Paar derartiger Verbindungsnuten und -wulste 54, 56 vorgesehen. Die Verbindungsnuten 54 haben einen im wesentlichen trapezförmigen Querschnitt, wobei sie sich zum Nutgrund hin verjüngen. An den beiden einander entgegengesetzten Seitenflächen der Verbindungswulste 56 sind nebeneinanderliegend mehrere Längsrippen 57 angeformt. Die Dicke der Verbindungswulste 56 im Bereich der Längsrippen 57 gemessen ist etwas größer als die Breite der Verbindungsnut 54 in deren Mündungsbereich 58.

Die Paare von Verbindungsnuten und -wulsten 54, 56 befinden sich an einander überlappenden Abschnitten der Längsränder 32, 32'. Zum Verschweißen werden die Plattenelemente 28a, 28b so aneinander angesetzt, daß ein jeweiliger Verbindungswulst 56 auf der Mündung der zugeordneten Verbindungsnut 54 zu liegen kommt. Dann werden die Plattenelemente gemäß Pfeilen 59 zusammengepreßt, wobei die Verbindungswulste 56 in die Verbindungsnuten 54 eingegepreßt werden. Dabei arbeiten die Längsrippen 57 gegen die Nutflanken der Verbindungsnuten 54 und werden plastisch verformt, da diese auf Grund der zugeordneten Wandstärke nicht zurückweichen. Dabei stellt sich eine Preßschweißverbindung zwischen dem Material des Verbindungswulstes 56 und der Wandung der zugeordneten Verbindungsnut 54 ein.

## Patentansprüche

1. Labormöbel, insbesondere für Schulungs- und/oder Demonstrationszwecke, mit einer Halteeinrichtung(6), die eine aufgerichtet angeordnete, als Strangpreßteil ausgeführte Nutenplatte (12) umfaßt, die an wenigstens einer ihrer beiden Plattenflächen (13, 13') eine Mehrzahl von parallel zueinander angeordneten, in Längsrichtung verlaufenden horizontalen Befestigungsnuten (14) aufweist, die zur lösbaren Halterung von Funktionselementen (8) wie z.B. Ventile, Arbeitszylinder, elektronische Steuergeräte od.dgl. dienen, dadurch gekennzeichnet, daß die Halteeinrichtung (6) am unteren Längsrand (18) der Nutenplatte (12) über wenigstens eine über einen Winkelbereich (23) einstückig mit der Nutenplatte (12) verbundene und ebenfalls als Strangpreßteil ausgeführte Querplatte (22, 22') verfügt und daß wenigstens einer der sich an den Winkelbereich (23) anschließenden Plattenabschnitte (12, 22, 22') der Halteeinrichtung (6) aus mehreren durch eine Kaltpreßschweißverbindung fest zusammengefügten Plattenelementen (28) besteht.

2. Labormöbel nach Anspruch 1, dadurch gekennzeichnet, daß die Nutenplatte (12) in einer Vertikalebene stehend ausgerichtet ist.

3. Labormöbel nach Anspruch 1 oder 2, dadurch gekennzeichnet, daß die Nutenplatte (12) an beiden Plattenflächen (13, 13') mit Befestigungsnuten (14) für Funktionselemente (8) ausgestattet ist.

4. Labormöbel nach einem der Ansprüche 1 bis 3, dadurch gekennzeichnet, daß der Winkelbereich (23) von einem einstückigen Winkelelement (26) gebildet ist, das eine der Anzahl der Nuten- und Querplatten (12, 22, 22') entsprechende Anzahl von winkelig zueinander angeordneten Schenkeln (27) aufweist, die jeweils zumindest teilweise die zugeordnete Nuten- bzw. Querplatte (12, 22, 22') bilden.

5. Labormöbel nach Anspruch 4, dadurch gekennzeichnet, daß das Winkelelement ein L-Element ist, dessen einer L-Schenkel (27) zumindest teilweise die Nutenplatte (12) und dessen anderer L-Schenkel (27, 27') zumindest teilweise eine horizontal ausgerichtete Querplatte (22) bildet.

6. Labormöbel nach Anspruch 4, dadurch gekennzeichnet, daß das Winkelelement (26) ein T-Element ist, dessen beide in einer gemeinsamen Horizontalebene liegenden T-Schenkel jeweils zumindest teilweise eine Querplatte (22, 22') bilden und dessen dritter T-Schenkel vertikal hochragend ausgerichtet ist und zumindest teilweise die Nutenplatte (12) bildet.

7. Labormöbel nach einem der Ansprüche 1 bis 6, dadurch gekennzeichnet, daß die vorhandenen Querplatten (22, 22') zumindet teilweise an wenigstens einer PlattenOberfläche (34) mit einer Mehrzahl von zueinander parallelen Befestigungsnuten (14) versehen sind.

8. Labormöbel nach einem der Ansprüche 1 bis 7, dadurch gekennzeichnet, daß der von der Nutenplatte (12) gebildete Plattenabschnitt der Halteeinrichtung (6) aus mehreren randseitig durch eine Kaltpreßschweißverbindung zusammengefügten Plattenelementen (28) besteht.

9. Labormöbel nach einem der Ansprüche 1 bis 8, dadurch gekennzeichnet, daß wenigstens ein von einer Querplatte (22, 22') gebildeter Plattenabschnitt der Halteeinrichtung (6) aus mehreren längsrandseitig durch eine Kaltpreßschweißverbindung zusammengefügten Plattenelementen (28) besteht.

10. Labormöbel nach einem der Ansprüche 1 bis 9, dadurch gekennzeichnet, daß wenigstens eine Querplatte (22, 22') eine Flüssigkeitsauffangwanne bildet.

11. Labormöbel nach einem der Ansprüche 1 bis 10, dadurch gekennzeichnet, daß die nach oben weisende Plattenfläche (34) von wenigstens einer horizontal ausgerichteten Querplatte (22, 22') in Richtung zur Nutenplatte (12) schräg ansteigt.

12. Labormöbel nach einem der Ansprüche 1 bis 11, dadurch gekennzeichnet, daß an wenigstens einem der über eine Kaltpreßschweißverbindung angefügten Plattenelemente (28, 29) eine einstückig angeformte, sich über die gesamte Plattenlänge erstreckende Sonderfunktionseinheit (42) vorgesehen ist, beispielsweise ein Bedienpultgehäuse, ein Leitungskanalgehäuse, ein Fluidspeichergehäuse oder ein Aufnahmerahmen für Einschubelemente.

13. Labormöbel nach einem der Ansprüche 1 bis 12, dadurch gekennzeichnet, daß zumindest die Nutenplatte (12) der Halteeinrichtung (6) einen Querschnitt mit Rippenstruktur aufweist, wobei im Platten-Innern in Längsrichtung durchgehende Kanäle (36) ausgebildet sind.

14. Labormöbel nach einem der Ansprüche 1 bis 13, gekennzeichnet durch eine Ausgestaltung als Tisch oder Wagen mit einem von der Halteeinrichtung (6) gebildeten Aufsatz.

15. Labormöbel nach einem der Ansprüche 1 bis 14, dadurch gekennzeichnet, daß die miteinander kaltpreßverschweißten Plattenelemente (28, 28a, 28b) an den aneinandersitzenden Längsrändern (32, 32') über mindestens ein Paar sich jeweils über die gesamte Plattenlänge erstreckender, rechtwinkelig zur Plattenebene ineinandergreifender Verbindungsnuten (54) und Verbindungswulste (56) verfügen, die unlösbar fest ineinandergepreßt sind, wobei an den Seitenflächen des Verbindungswulstes (56) oder der Verbindungsnut (54) in Längsrichtung durchgehende Längsrippen (57) angeformt sind, die gegen die zugewandte Seitenfläche des jeweils anderen Bauteils arbeiten.

## Claims

1. Laboratory furniture, in particular for training and/or demonstration purposes, with a retaining device (6) comprising an upright slotted plate (12) in the form of an extruded section, having on at least one of its two plate surfaces (13, 13') a multiplicity of fastening slots (14) arranged parallel to one another and running horizontally in the longitudinal direction, and serving for the releasable fastening of functional elements (8) such as valves, operating cylinders, electronic control units or the like, characterized in that the retaining device (6) has on the bottom longitudinal edge (18) of the slotted plate (12) one or more transverse plates (22, 22') joined in one piece via an angle section (23) to the slotted plate (12), and similarly in the form of an extruded section, and that one or more of the plate sections (12, 22, 22') of the retaining device (6) adjoining the angle section (23) is or are comprised of several plate elements (28) permanently joined together by a cold-welded connection.

2. Laboratory furniture according to claim 1, characterized in that the slotted plate (12) is aligned upwards in a vertical plane.

3. Laboratory furniture according to claim 1 or 2, characterized in that the slotted plate (12) is equipped on both plate surfaces (13, 13') with fastening slots (14) for functional elements (8).

4. Laboratory furniture according to any of claims I to 3, characterized in that the angle section (23) is formed by a one-piece angle element (26) which has a number of legs (27) arranged at right-angles to one another corresponding to the number of slotted and transverse plates (12, 22, 22'), and each forming at least partly the assigned slotted or transverse plate (12, 22, 22').

5. Laboratory furniture according to claim 4, characterized in that the angle element is an L-element with one L leg (27) forming at least partly the slotted plate (12) and the other L leg (27, 27') forming at least partly a horizontally-aligned transverse plate (22).

6. Laboratory furniture according to claim 4, characterized in that the angle element (26) is a T-element, with its two T legs lying in a common horizontal plane each forming at least partly a transverse plate (22, 22'), and with its third T leg extending vertically upwards and forming at least partly the slotted plate (12).

7. Laboratory furniture according to any of claims 1 to 6, characterized in that the available transverse plates (22, 22') are provided at least partly, on one or more plate surfaces (34), with a multiplicity of fastening slots (14) parallel to one another.

8. Laboratory furniture according to any of claims 1 to 7, characterized in that the plate section of the retaining device (6) formed by the slotted plate (12) is comprised of several plate elements (28) joined together at the edges by a cold-welded connection.

9. Laboratory furniture according to any of claims 1 to 8, characterized in that at least one plate section of the retaining device (6) formed by a transverse plate (22, 22') is comprised of several plate elements (28) joined together at the long side edges by a cold-welded connection.

10. Laboratory furniture according to any of claims 1 to 9, characterized in that one or more of the transverse plates (22, 22') forms a fluid collecting tray.

11. Laboratory furniture according to any of claims 1 to 10, characterized in that the upwards facing plate surface (34) of one or more horizontally aligned transverse plates (22, 22') rises obliquely towards the slotted plate (12).

12. Laboratory furniture according to any of claims 1 to 11, characterized in that on one or more of the plate elements (28, 29) attached by a cold-welded connection there is provided, extending over the whole plate length, a special functional unit (42), for example a control console housing, a conduit housing, a fluid reservoir housing or a mounting frame for insert elements.

13. Laboratory furniture according to any of claims 1 to 12, characterized in that at least the slotted plate (12) of the retaining device (6) has a cross-section with a rib structure, wherein continuous longitudinal passages (36) are formed in the plate interior.

14. Laboratory furniture according to any of claims 1 to 13, characterized by a design as table or trolley with a top section formed by the retaining device (6).

15. Laboratory furniture according to any of claims 1 to 14, characterized in that the plate elements (28, 28a, 28b) cold-welded together have at the adjoining longitudinal edges (32, 32') at least one pair of connection slots (54) and connection flanges (56), each extending over the whole plate length and engaging in one another at right-angles to the plane of the plate, which are firmly pressed into one another so as to be incapable of release, wherein the side faces of the connection flange (56) or connection slot (54) have integral longitudinal ribs (57) which are continuous in the longitudinal direction and act against the facing side of the other component in each case.

## Revendications

1. Meuble de laboratoire, notamment à des fins de formation et/ou de démonstration, comportant un dispositif de maintien (6) qui comprend une plaque rainurée (12) réalisée en tant qu'élément extrudé, qui est disposée debout et qui comporte, sur au moins l'une de ses deux surfaces de plaque (13, 13'), une pluralité de rainures de fixation horizontales (14) disposées parallèlement entre elles et s'étendant dans la direction longitudinale, qui servent à la fixation non permanente d'éléments fonctionnels (8) tels que par exemple des vannes, des cylindres de travail, des appareils électroniques de commande ou similaires, caractérisé en ce que le dispositif de maintien (6) dispose, sur le bord longitudinal inférieur (18) de la plaque rainurée (12), d'au moins une plaque transversale (22, 22') reliée d'une seule pièce à la plaque rainurée (12), par une zone coudée (23), et réalisée également en tant qu'élément extrudé, et en ce qu'au moins l'une des parties en forme de plaque (12, 22, 22') du dispositif de maintien (6), qui se raccordent à la zone coudée (23), est constituée de plusieurs éléments de plaque (28) assemblés fixement par soudage à froid.

2. Meuble de laboratoire selon la revendication 1, caractérisé en ce que la plaque rainurée (12) est orientée debout dans un plan vertical.

3. Meuble de laboratoire selon la revendication 1 ou 2, caractérisé en ce que la plaque rainurée (12) est pourvue sur ses deux surfaces de plaque (13, 13') de rainures de fixation (14) pour des éléments fonctionnels (8).

4. Meuble de laboratoire selon l'une des revendications 1 à 3, caractérisé en ce que la zone coudée (23) est formée par un élément coudé (26) d'une seule pièce, qui comporte un nombre de branches (27) disposées en angle l'une par rapport à l'autre, qui correspond au nombre de plaques rainurées et de plaques transversales (12, 22, 22'), lesquelles branches constituent chacune au moins en partie la plaque rainurée ou plaque transversale (12, 22, 22') correspondante.

5. Meuble de laboratoire selon la revendication 4, caractérisé en ce que l'élément coudé est un élément en L dont une branche (27) du L constitue au moins en partie la plaque rainurée (12) et dont l'autre branche (27, 27') du L constitue au moins en partie une plaque transversale (22) orientée horizontalement.

6. Meuble de laboratoire selon la revendication 4, caractérisé en ce que l'élément coudé (26) est un élément en T dont les deux branches du T, situées dans un plan horizontal commun, constituent chacune au moins en partie une plaque transversale (22, 22') et dont la troisième branche du T est orientée verticalement vers le haut et constitue au moins en partie la plaque rainurée (12).

7. Meuble de laboratoire selon l'une des revendications 1 à 6, caractérisé en ce que les plaques transversales (22, 22') prévues sont pourvues, au moins en partie sur au moins une surface de plaque (34), d'une pluralité de rainures de fixation (14) parallèles entre elles.

8. Meuble de laboratoire selon l'une des revendications 1 à 7, caractérisé en ce que la partie en forme de plaque du dispositif de maintien (6), formée par la plaque rainurée (12), est constituée de plusieurs éléments de plaque (28) assemblés sur leur bord, par un soudage à froid.

9. Meuble de laboratoire selon l'une des revendications 1 à 8, caractérisé en ce qu'au moins une partie en forme de plaque du dispositif de maintien (6), formée par une plaque transversale (22, 22'), est constituée par plusieurs éléments de plaque (28) assemblées sur leurs bords longitudinaux par un soudage à froid.

10. Meuble de laboratoire selon l'une des revendications 1 à 9, caractérisé en ce qu'au moins une plaque transversale (22, 22') forme un bac de collecte de liquide.

11. Meuble de laboratoire selon l'une des revendications 1 à 10, caractérisé en ce que la surface de plaque (34), dirigée vers le haut, monte obliquement depuis au moins une plaque transversale (22, 22') orientée horizontalement, en direction de la plaque rainurée (12).

12. Meuble de laboratoire selon l'une des revendications 1 à 11, caractérisé en ce que sur au moins l'un des éléments de plaque (28, 29), assemblés par soudage à froid, il est prévu une unité fonctionnelle spéciale (42), venue de moulage d'une seule pièce et s'étendant sur toute la longueur de la plaque, par exemple un boîtier de pupitre de commande, un boîtier de caniveau de câbles, un boîtier d'accumulateur de fluide ou un cadre de réception d'éléments en tiroir.

13. Meuble de laboratoire selon l'une des revendications 1 à 12, caractérisé en ce qu'au moins la plaque rainurée (12) du dispositif de maintien (6) présente une section à structure nervurée, des canaux (36) continus dans la direction longitudinale étant formés à l'intérieur de la plaque.

14. Meuble de laboratoire selon l'une des revendications 1 à 13, caractérisé par une conformation en table ou en chariot avec un accessoire rapporté constitué par le dispositif de maintien (6).

15. Meuble de laboratoire selon l'une des revendications 1 à 14, caractérisé en ce que les éléments de plaque (28, 28a, 28b) soudés entre eux à froid disposent, sur les bords longitudinaux (32, 32') adjacents, d'au moins une paire de rainures de liaison (54) et de bourrelets de liaison (56) qui s'étendent chacun sur toute la longueur de la plaque et qui s'engagent les uns dans les autres à angle droit par rapport au plan de la plaque, et qui sont pressés fixement les uns dans les autres de manière permanente, sur les surfaces latérales du bourrelet de liaison (56) ou de la rainure de liaison (54) étant formées des nervures longitudinales (57) continues dans la direction longitudinale, qui agissent contre la surface latérale, tournée vers ces nervures, de l'autre composant.
